# EUROPEAN PATENT SPECIFICATION

(11) **EP 2 479 050 B1**
(45) Date of publication and mention of the grant of the patent: **19.06.2013**
(21) Application number: 12150625.7
(22) Date of filing: 10.01.2012
(51) Int. Cl.: B60J 5/04

(54) **Door pocket member for vehicle**
Tasche für Kraftfahrzeugtür
Poche pour porte de véhicule

(30) Priority: 25.01.2011 JP 2011013144
(43) Date of publication of application: 25.07.2012
(73) Proprietor: Honda Motor Co., Ltd., Tokyo 107-8556 (JP)
(72) Inventor: Odagiri, Shuhei, Saitama,, 351-0193 (JP); Takeuchi, Toshimasa, Saitama,, 351-0193 (JP)
(74) Representative: Prechtel, Jörg

(56) References cited:
- JP-A- 2001 279 962
- JP-A- 2006 328 901
- JP-U- 64 045 524

## Description

The present invention relates to a vehicular door including a door pocket member configured to engage a hand of a passenger when the door is moved by the passenger between an open position and a closed position as e.g. shown in JP 2001279962.

Vehicular doors have door bodies and door linings disposed on the door bodies and located in passenger compartments. Armrests are disposed on the door linings and protrude toward the passenger compartments. Disposed on the armrests are box-shaped, open-topped door pocket members. The door pocket members have portions configured to engage a passenger's hand when the doors are opened or closed by the passenger. One example of these doors is disclosed in JP-A-2010-188910.

The door disclosed in JP-A-2010-188910 includes a structure configured to engage a passenger's hand. This structure is defined by a hole formed through a door pocket member and a projection of an armrest protruding through the hole. Since this structure is not provided by the door pocket member alone, it would take a long time to assemble the structure. Also, maintenance of the door pocket member and the armrest would be troublesome. Instead of assembling the door pocket member and the armrest together to provide the structure for engaging the passenger's hand, one may suggest attaching to the door pocket member an additional member configured to engage the passenger's hand. However, the provision of such an additional member increases the number of parts of the door without reducing the cost of the door.

An object of the present invention is to provide a low-cost vehicular door which can be assembled with improved efficiency.

Accordingly to one aspect of the present invention, there is provided a door of a vehicle, comprising a door pocket member for engaging a hand of a passenger when the door is moved by the passenger between an open position and a closed position, the door pocket member comprising: an open end portion; a vertical wall portion disposed on a side of a passenger compartment of the vehicle; a hinge portion formed on the vertical wall portion; and a movable portion connected to the hinge portion and disposed on a side of the open end portion, the movable portion having a convexity formed thereon, the convexity being positioned inside the door pocket member by pivotal movement of the movable portion on the hinge portion.

The door pocket member of the door has the convexity positioned inside the door pocket member for engagement with a passenger's hand. This convexity is formed integrally with the door pocket member. In general, for convenience of a molding process for a door pocket member, no portion configured to engage a passenger's hand is formed on the molded door pocket member. Such a molded door pocket member and another member separate from the door pocket member and configured to a passenger's hand are assembled together. This means that the door pocket member undesirably uses an additional member to engage a passenger's hand. In contrast to this door pocket member free from the portion configured to engage a passenger's hand, the door pocket member of the present invention has the convexity formed integrally therewith for engagement with a passenger's hand. Since the door pocket member of the door has the convexity for engagement with a passenger's hand, the door need not have an additional member to engage a passenger's hand. The door which does not require such an additional member is small in cost and can be assembled with increased efficiency.

In a preferred form of the invention, the door further includes an armrest located in the passenger compartment. The door pocket member is disposed on the armrest and has a box-shape. The door pocket member has a top end portion defined by the open end portion. The hinge portion extends in a front-and-rear direction of the vehicle, and the convexity extends in the front-and-rear direction of the vehicle.

In a further preferred form of the invention, the hinge portion is located at a level between levels of top and bottom edges of the vertical wall portion. As a result, the movable portion does not protrude outward of the open end portion by a longer distance. As a result, moldability of the door pocket member increases.

Preferably, the hinge portion is disposed on the side of the open end portion. With the hinge portion located on the side of the open end portion, the convexity of the inner vertical wall portion has a portion located above the open end portion after the movable portion pivots toward the open end portion on the hinge portion. The portion of the convexity located above the open end portion facilitates engagement of the convexity with a passenger's hand. This means that the portion of the convexity located above the open end portion improves a function of the convexity to engage a passenger's hand.

Preferably, the hinge portion is provided in plural. The provision of the plural hinge portions can provide the convexity with various shapes. That is, the provision of the plural hinge portions improves freedom to design the convexity.

Preferably, the vertical wall portion has a hole through which the convexity extends. The convexity can be secured to the inner vertical wall portion by extending through the hole of the inner vertical wall portion. The door can be thus securely assembled.

Certain preferred embodiments of the present invention will hereinafter be described in detail, by way of example only, with reference to the accompanying drawings, in which:
Fig. 1 is a view showing a passenger compartment of a vehicle with a door according to the present invention;
Fig. 2 is a perspective view of a vehicular door in a first embodiment of the present invention;
Fig. 3 is a perspective view of a door pocket of the door shown in Fig. 2;
Fig. 4 is a cross-sectional view taken along line 4-4 of Fig. 3;
Fig. 5 is a cross-sectional view taken along line 5-5 of Fig. 3;
Fig. 6 is a perspective view of the door pocket member as the door pocket member is molded prior to being used in the vehicular door;
Fig. 7 is a plan view of the door pocket member as the door pocket member is molded prior to being used in the vehicular door;
Fig. 8 is a cross-sectional view taken along line 8-8 of Fig. 7;
Figs. 9A to 9C are views showing how the door pocket member is finished for use in the vehicle door;
Fig. 10A is a view showing a door pocket assembly for comparison with the door pocket member shown in Fig. 3;
Fig. 10B is a view showing that the door pocket member of Fig. 3 is used in the door;
Fig. 11 is a perspective view of a door pocket member of a vehicular door in a second embodiment of the present invention;
Fig. 12 is a cross-sectional view of the door pocket member as the door pocket member is molded prior to being used in the vehicular door;
Fig. 13 is a cross-sectional view taken along line 13-13 of Fig. 11;
Fig. 14 is a perspective view of a door pocket member of a vehicular door in a third embodiment of the present invention;
Fig. 15 is a cross-sectional view of the door pocket member as the door pocket member is molded prior to being used in the vehicular door; and
Fig. 16 is a cross-sectional view taken along line 16-16 of Fig. 14.

### DETAILED DESCRIPTION OF THE PREFERRED EMBODIMENTS

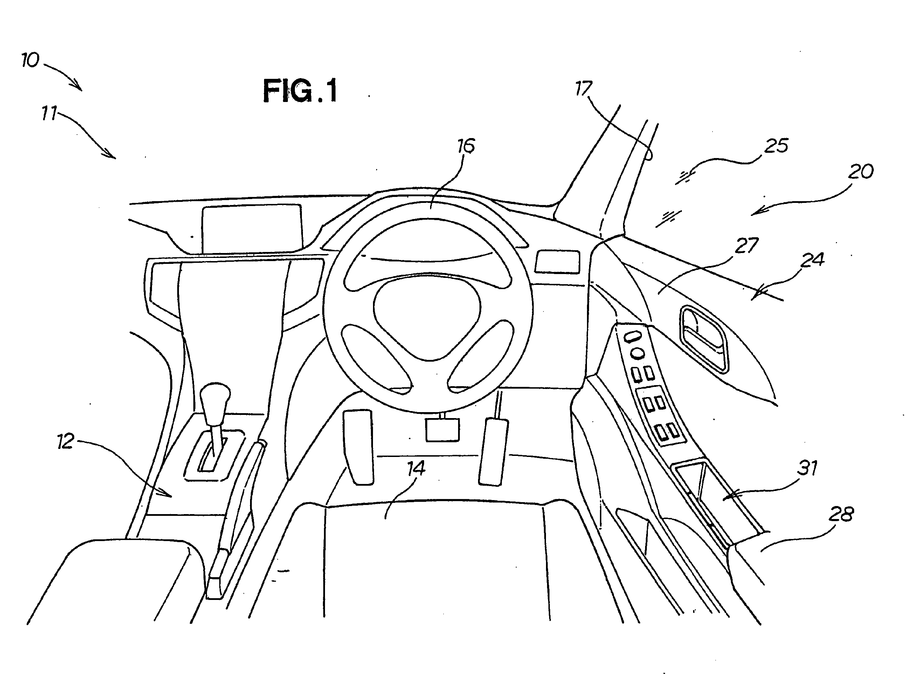

Referring to Fig. 1, there is shown a passenger compartment 12 of a vehicle 10. Provided within the compartment 12 are a driver's seat 14 for a driver (passenger) and a steering wheel 16 to steer the vehicle 10. The vehicle 10 includes a door opening portion 17, and a door 20 movable between an open position to open the door opening portion 17 for allowing the passenger to go into or out of the vehicle 10 and a closed position to close the door opening portion 17.

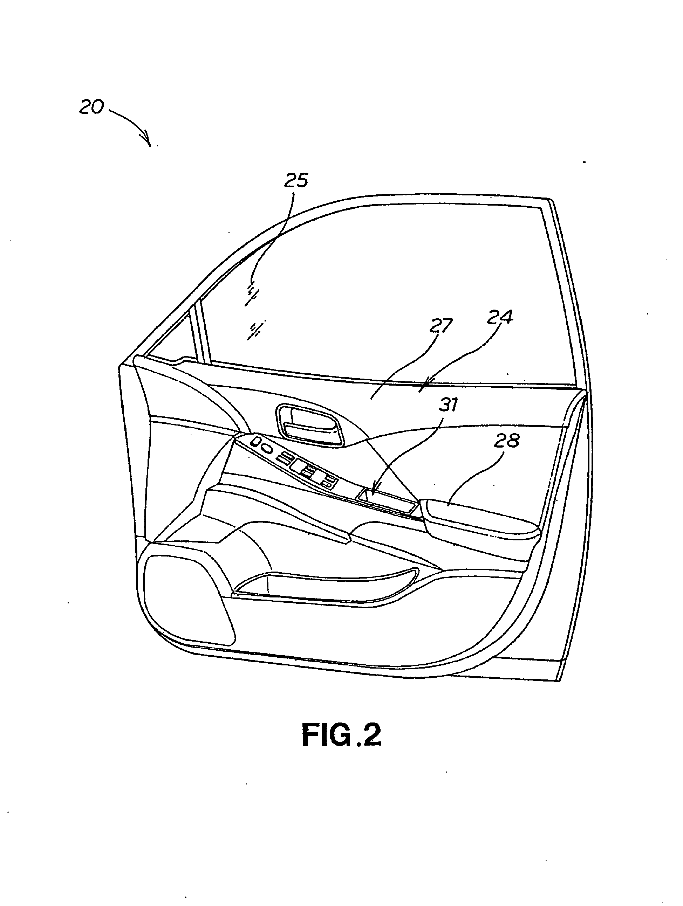

As shown in Fig. 1 and Fig. 2, the door 20 includes a door body 24 attached to a vehicle body 11 in such a manner that the door 20 moves between the open position and the closed position. The door 20 further includes a door glass 24 attached to the door body 24 in such a manner as to move up and down, and a door lining 27 covering the door body 24 within the passenger compartment 12. The door 20 includes an armrest 28 disposed on the door body 24 in the passenger compartment 12. The armrest 28 is positioned at a half level of the door lining 27 and extends in a front-and-rear direction of the vehicle body 11. The door 20 further includes a door pocket member 31 disposed on the armrest 28 for engaging a hand of a passenger when the door 20 is moved by the passenger between the open position and the closed position.

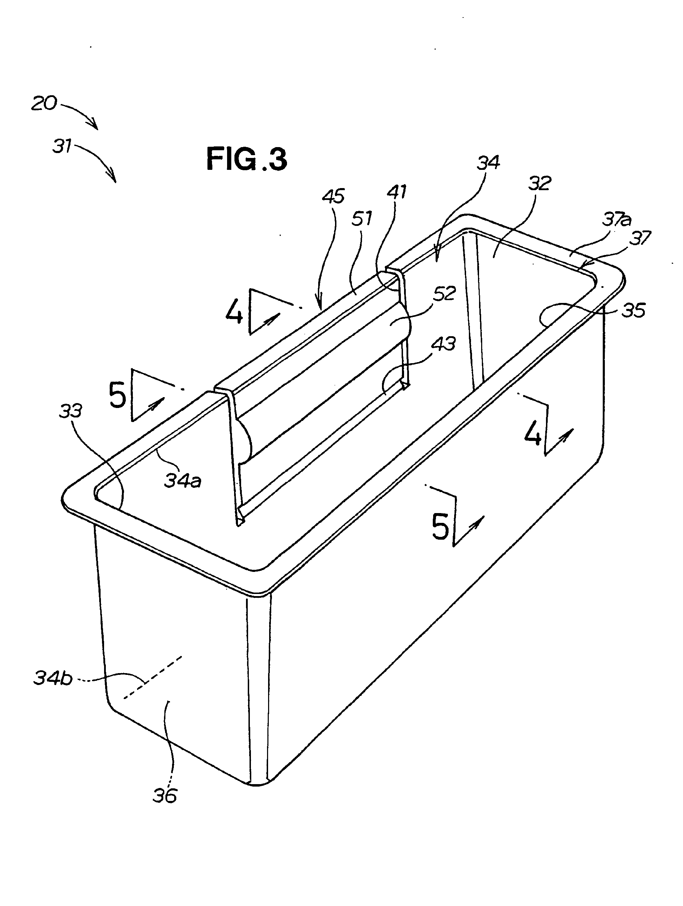

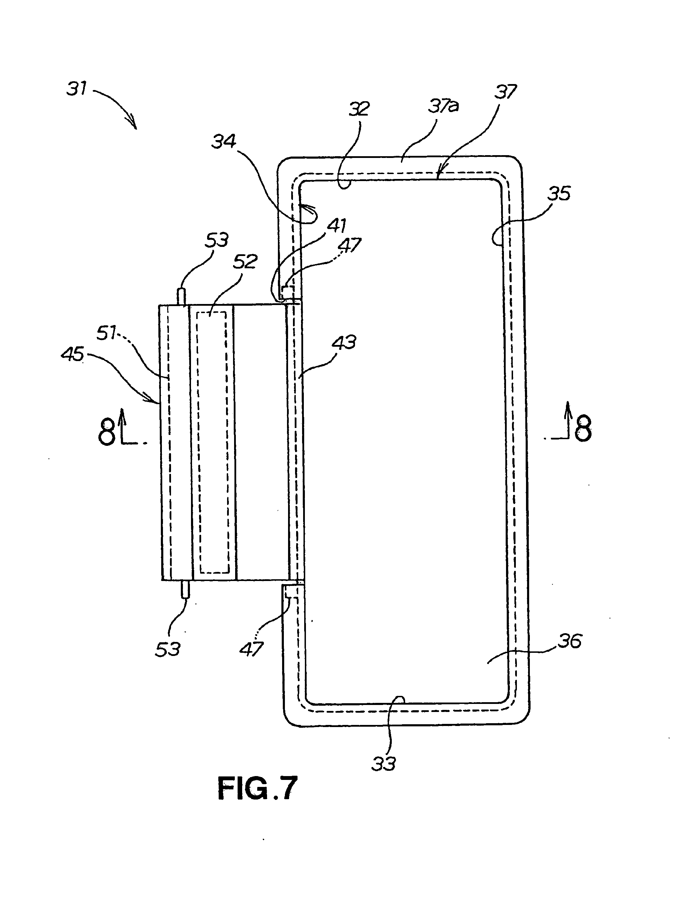

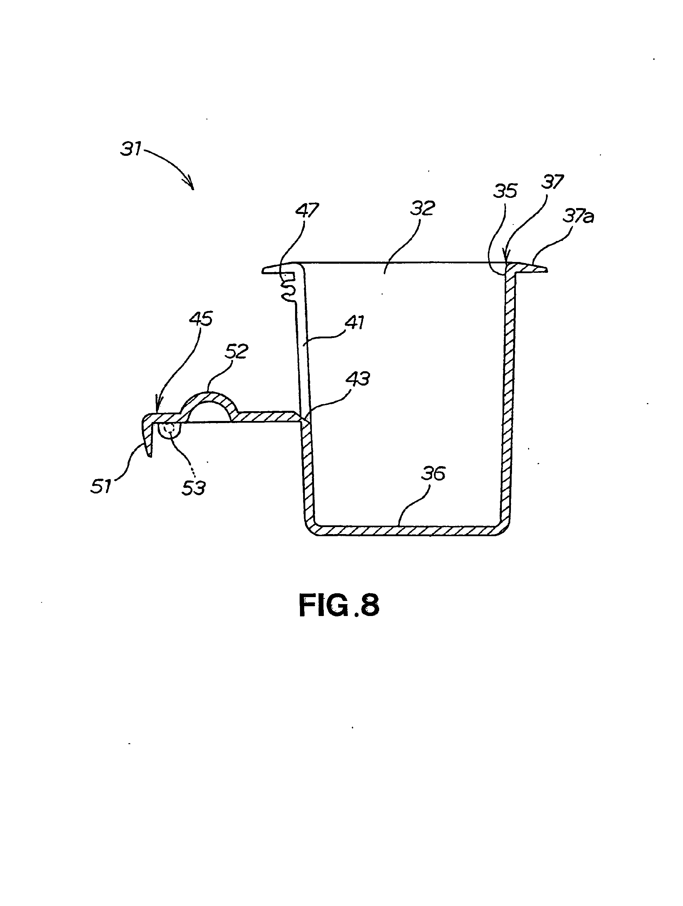

Turning to Fig. 3 to Fig. 8, the door pocket member 31 is a box-shaped, open-topped member. The pocket member 31 includes a front vertical wall portion 32, a rear vertical wall portion 33, an inner vertical wall portion 34, an outer vertical wall portion 35, a bottom wall portion 36 and an upper opening portion (open end portion) 37. The open end portion 37 has an upper flange 37a extending along top edges of the wall portions 32, 33, 34, 35.

The door pocket member 31 has a cutout portion 41 formed at a center of an upper half of the inner vertical wall portion 34 located on a side of the passenger compartment 12. The pocket member 31 also includes a hinge portion 43 formed at a lower end of the cutout portion 41 and extending in the front-and-rear direction of the vehicle body 11. The pocket member 31 further includes a movable portion 45 pivotably connected to the hinge portion 43, and front and rear engagement portions 47, 47 for engaging the movable portion 45.

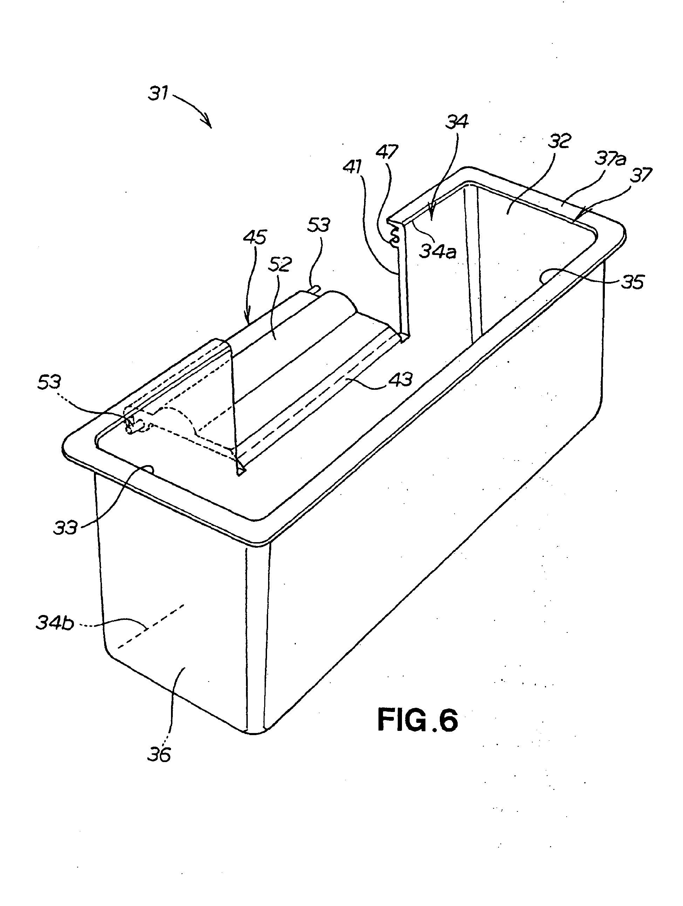

The lower end of the cutout portion 41 has a half height of the inner vertical wall portion 34. The hinge portion 43 is located at a level between levels of top and bottom edges 34a, 34b of the inner vertical wall portion 34, and allows the movable portion 45 to pivot from a position shown in Fig. 6 (toward the outside of the vehicle) on the hinge portion 43.

The movable portion 45 has a flange 51 disposed opposite the hinge portion 43. The flange 51 projects downwardly when the door pocket member 31 is molded before used with the door 20. The movable portion 45 also has a convexity 52 extending in the front-and-rear direction of the vehicle body 11. The convexity 52 is oriented upward when the door pocket member 31 is molded before used in the door 20. The movable portion 45 further has front and rear engaging projections 53, 53 protruding in the front-and-rear direction of the vehicle body 11 for engagement with the engagement portions 47, 47. The movable portion 45 is aligned with the inner vertical wall portion 34 with the flange 51 aligned with the upper flange 37a of the open end portion 37 when the door pocket member 31 is used in the door 20.

The front engagement portion 47 is disposed forward of the cutout portion 41 and the rear engagement portion 47 is disposed rearward of the cutout portion 41. The front and rear engagement portions 47, 47 extend in the front-and-rear direction of the vehicle body 11. The front and rear engagement portions 47, 47 each have a C-shaped or ring-shaped cross-section.

The front engaging projection 53 protrudes forward from a front edge of the movable portion 45 and the rear engaging projection 53 protrudes rearward from a rear edge of the movable portion 45. The front and rear engaging projections 53, 53 each have a cylindrical shape.

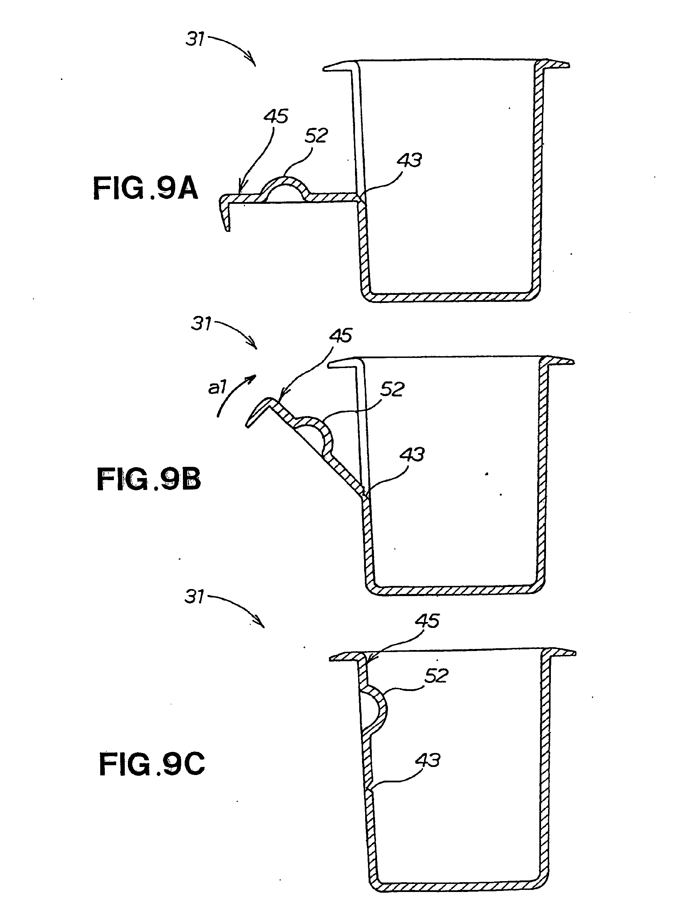

As shown in Fig. 6 to Fig. 8, when the door pocket member 31 is molded before used in the door 20, the movable portion 45 projects toward the passenger compartment 12. The movable portion 45 is oriented in a direction substantially perpendicular to the inner vertical wall portion 34. Fig. 9A shows the movable portion 45 in a position where the movable portion 45 is oriented in the direction substantially perpendicular to the inner vertical wall portion 34. The movable portion 45 pivots from the position shown in Fig. 9A, as shown by an arrow a1 of Fig. 9B, to a position shown in Fig. 9C. With the movable portion 45 in the position shown in Fig. 9C, the door pocket member 31 can be used in the door 20.

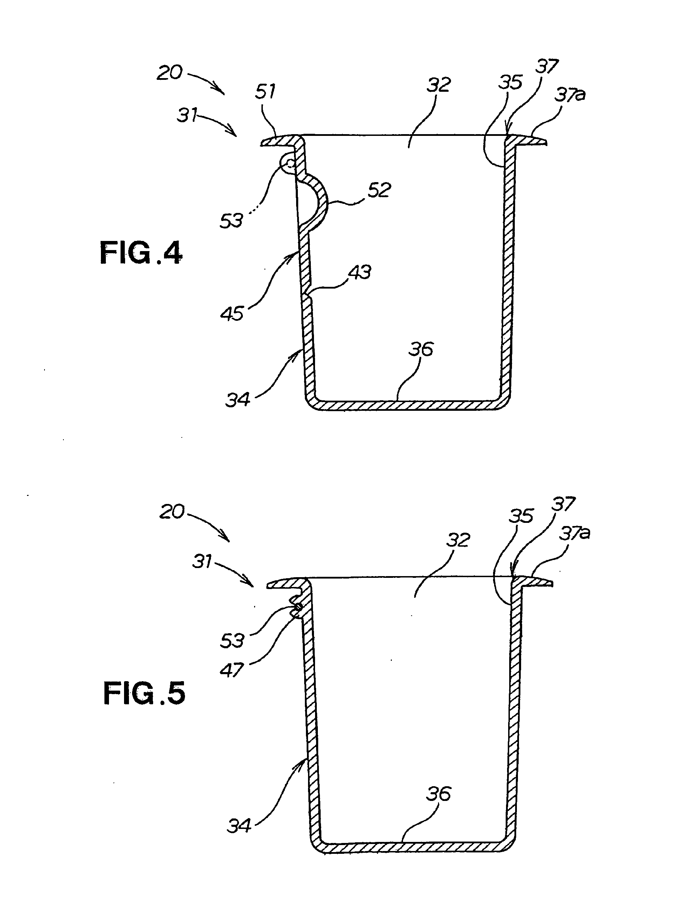

When the door pocket member 31 is used in the door 20, the engaging projections 53, 53 engage the engagement portions 47, 47, as shown in Figs. 4 and 5, and the convexity 52 is disposed inside the inner vertical wall portion 34, as shown in Fig. 3. Namely, the pivotal movement of the movable portion 45 on the hinge portion 43 positions the convexity 52 inside the door pocket member 31, such that the convexity 52 positioned inside the door pocket member 31 can engage a passenger's hand when the door 20 is moved by the passenger between the open and closed positions.

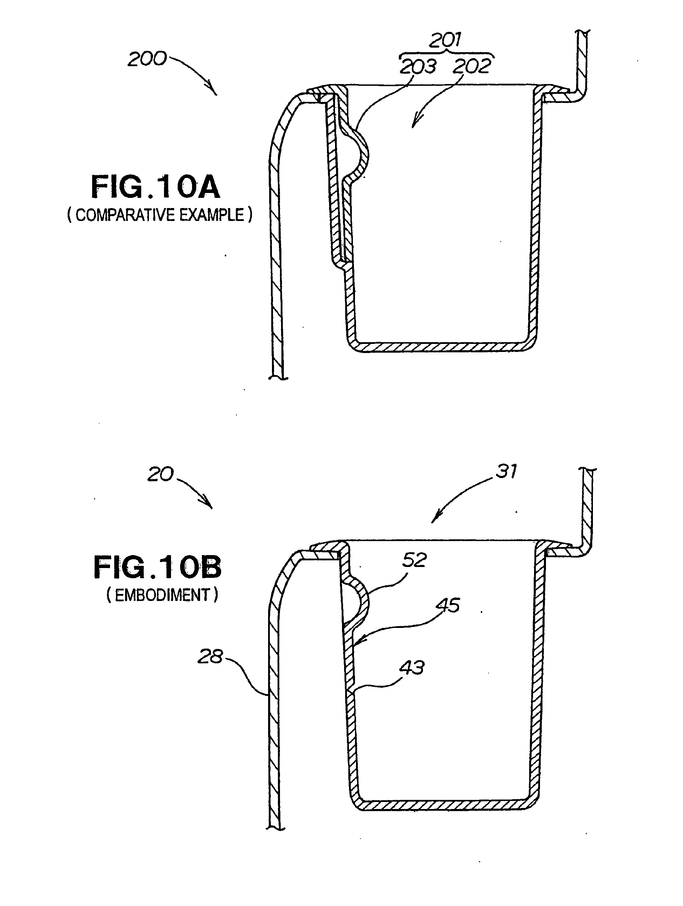

Fig. 10A shows a vehicular door 200 having a door pocket assembly 201 for comparison with the vehicular door 20 having the door pocket member 31 in the first embodiment of the present invention. The door pocket assembly 201 includes a box-shaped, open-topped pocket body 202 and an engagement member 203 disposed inside the pocket body 202 on a side of a passenger compartment for engagement with a passenger's hand. The engagement member 203 is a member separate from the pocket body 202. That is, the door pocket assembly 201 is formed by assembling the pocket body 202 and the engagement portion 203 together. For the door pocket assembly 201, however, the pocket body 202 and the engagement portion 203 are less precisely assembled together. Additionally, assembling the two different components, the pocket body 202 and the engagement member 203, could result in increasing cost of the vehicular door 200.

Fig. 10B illustrates the door pocket member 31 of the door 20. As explained with reference with Fig. 9A to Fig. 9C, the convexity 52 is positioned inside the door pocket member 31 after the movable portion 45 pivots on the hinge portion 43 towards the open end portion 37. The convexity 52 is adapted to engage a passenger's hand. The door pocket member 31 has the convexity 52 formed integrally therewith.

As shown in Fig. 1 to Fig. 3, the door 20 includes the door pocket member 31 configured to engage a hand of a passenger when the door 20 is moved by the passenger between the open and closed positions. The hinge portion 43 is formed on the inner vertical wall portion 34. The movable portion 45 extends from the hinge portion 43 toward the open end portion 37. The movable portion 45 has the convexity 52 formed thereon. The movable portion 45 pivots on the hinge portion 43, such that the convexity 52 is positioned inside the door pocket member 31. The convexity 52 is integral with the door pocket member 31 and adapted to engage a hand of a passenger, as discussed above. For the convenience of a process for molding a door pocket member, generally, no hand-engaging portion such as the convexity 52 is formed on the molded door pocket member. Thus, an additional member acting as the hand-engaging portion should be formed independently of the door pocket member. This additional member and the door pocket member are assembled together to provide a door pocket assembly. Namely, such a door pocket assembly is required to use an additional member to engage a passenger's hand. In contrast to this door pocket assembly, the door pocket member 31 has the convexity 52 formed integrally therewith for engaging a passenger's hand. The provision of the convexity 52 integral with the door pocket member 31 eliminates a need for an additional member to engage a passenger's hand. The provision of the door pocket member 31 having this convexity 52 facilitates assemblage of the door 20 as well as reducing the cost of the door 20.

As shown in Fig. 3 and Fig. 6, the hinge portion 43 is located at the level between the levels of the top and bottom edges 34a, 34b of the inner vertical wall portion 34. Therefore, the movable portion 45 does not project outward of the open end portion 37 by a longer distance. The movable portion 45, which does not project by a longer distance improves moldability of the door pocket member 31.

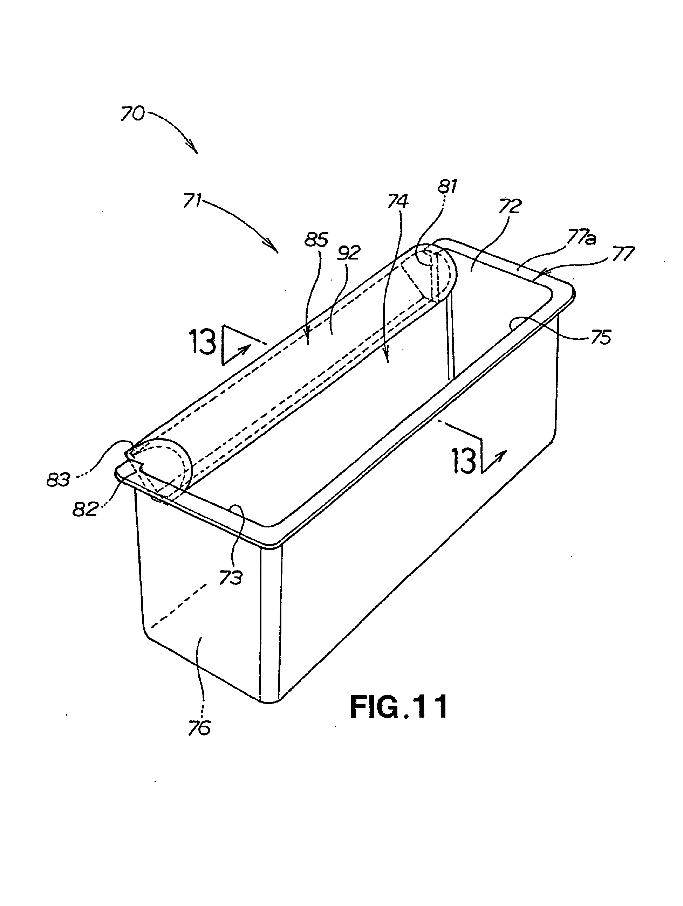

Fig. 11 shows a vehicular door 70 in a second embodiment of the present invention. The door 70 includes the same arrangement as the door 20 except that the door 70 has a door pocket member 71 as discussed below.

As shown in Fig. 11 to Fig. 13, the door pocket member 71 is a box-shaped, open-topped member including a front vertical wall portion 72, a rear vertical wall portion 73, an inner vertical wall portion 74, an outer vertical wall portion 75, a bottom wall portion 76, and an upper opening portion (open end portion) 77. The open end portion 77 has an upper flange 77a extending along top edges of the wall portions 72, 73 and 75.

The inner vertical wall portion 74 is disposed on the side of the passenger compartment 12, and has a cutout portion 81 formed substantially throughout the length of an upper end of the inner vertical wall portion 74. The door pocket member 71 has a flat portion 86 extending horizontally from a top edge of the inner vertical wall portion 74 toward the passenger compartment 12, and a slanted portion 82 disposed above the inner vertical wall portion 74 and extending obliquely upward from the flat portion 86 toward the passenger compartment 12. The door pocket member 71 further includes a hinge portion 83 disposed on a side of the open end portion 77. More specifically, the hinge portion 83 is formed on the slanted portion 82 and extending in the front-and-rear direction of the vehicle body 11. The door pocket member 71 also includes a movable portion 85 connected to the hinge portion 83 in such a manner to pivot on the hinge portion 83 toward the open end portion 77 of the door pocket member 71.

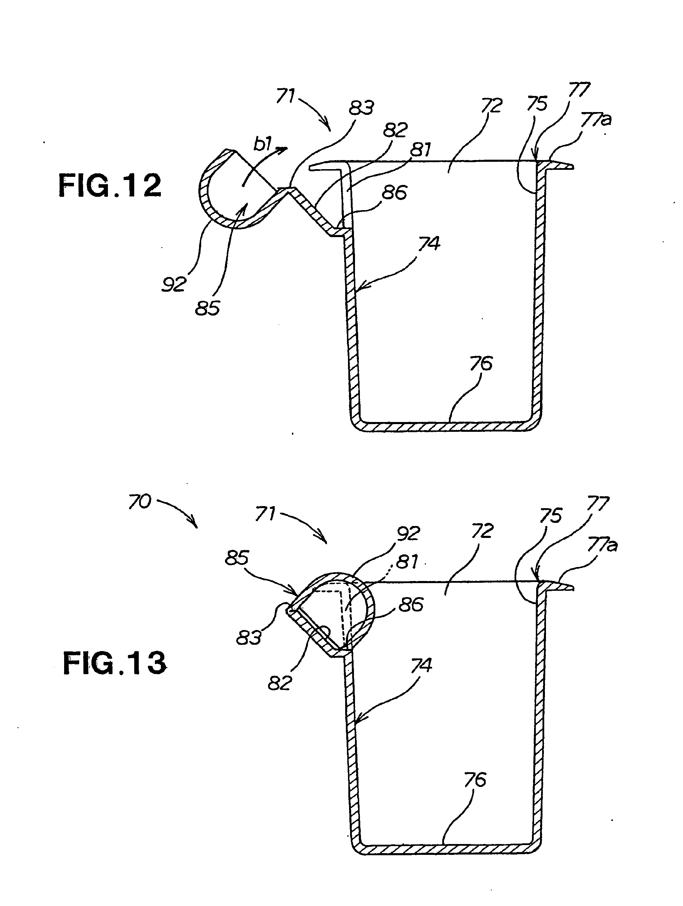

As shown in Fig. 12 and Fig. 13, the movable portion 45 has a convexity 92 formed thereon and extending in the front-and-rear direction of the vehicle body 11. The convexity 92 protrudes obliquely downward when the movable portion 45 is molded before used in the door 20. The movable portion 45 is pivotable on the hinge portion 83, as shown by an arrow b1 of Fig. 12, in such a manner as to position the convexity 92 inside the door pocket member 71, as shown in Fig. 13. The convexity 92 positioned inside the door pocket member 71 is adapted to engage a passenger's hand.

As shown in Fig. 11 to Fig. 13, the hinge portion 83 is disposed on the side of the open end portion 77 and allows the movable portion 85 to pivot on the hinge portion 83 such that the convexity 92 is positioned inside the door pocket member 71. When positioned inside the door pocket member 71, the convexity 92 has a portion located above the open end portion of the door pocket member 71 to facilitate engagement of the convexity 92 with a passenger's hand. In other words, this portion of the convexity 92 provides the convexity 92 with improved function to engage a passenger's hand. Additionally, the slanted portion 82 is inclined toward the passenger compartment 12, and hence the convexity 92 is inclined toward the passenger compartment 12, too. This inclination of the convexity 92 toward the passenger compartment 12 also facilitates engagement of the convexity 92 with a passenger's hand.

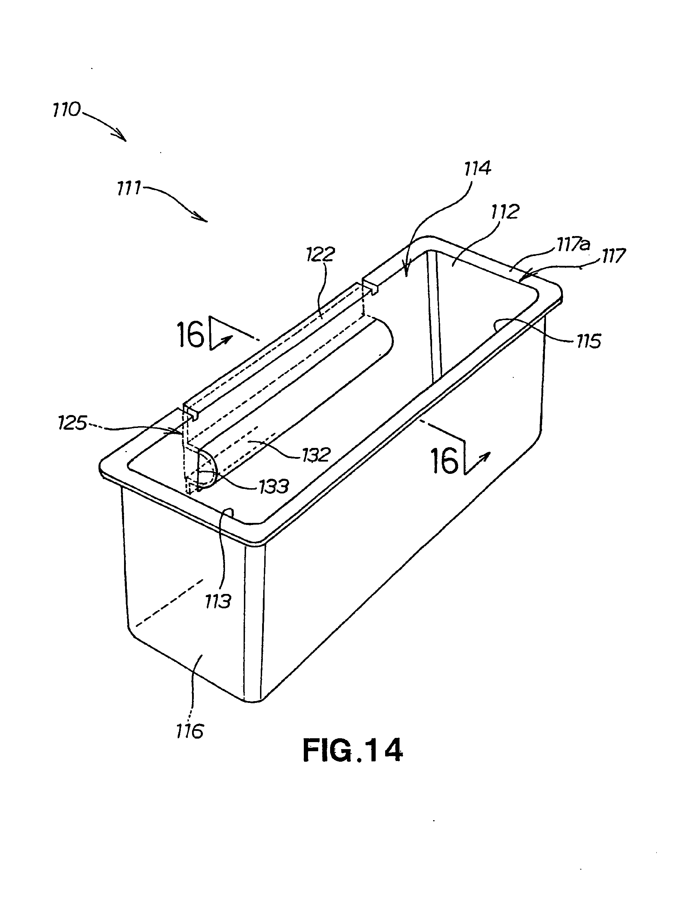

Fig. 14 shows a vehicular door 110 in a third embodiment of the present invention. The door 110 has the same arrangement as the door 20 except that the door 110 includes a door pocket member 111 as discussed below.

As shown in Fig. 14 to Fig. 16, the door pocket member 111 is a box-shaped, open-topped member including a front vertical wall portion 112, a rear vertical wall portion 113, an inner vertical wall portion 114, an outer vertical wall portion 115, a bottom wall portion 116, and an upper opening portion (open end portion) 117. The open end portion 117 has an upper flange 117a extending along top edges of the wall portions 112, 113, 114, 115.

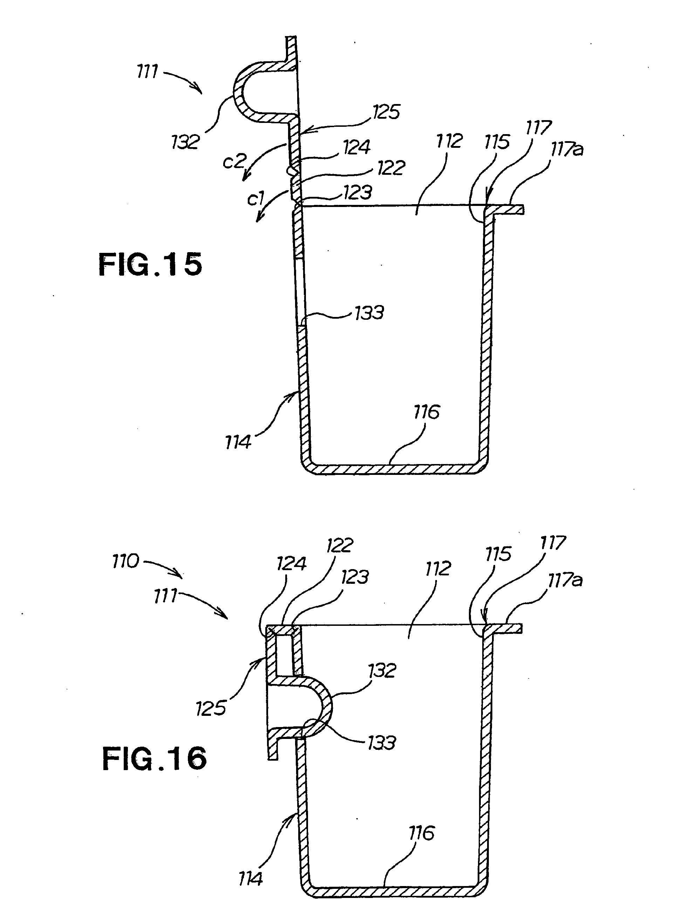

The door pocket member 111 includes a first hinge portion 123 formed on the inner vertical wall portion 114 disposed on the side of the passenger compartment 12. The first hinge portion 123 lies in the same plane as the open end portion 117. The inner vertical wall portion 114 includes a flange portion 122 pivotably connected to the first hinge portion 123. The door pocket member 111 further includes a second hinge portion 124 formed distally of the flange portion 122. The door pocket member 111 still further includes a movable portion 125 pivotably connected to the second hinge portion 124. The movable portion 125 has a convexity 132 protruding toward the passenger compartment 12 when the door pocket member 111 is molded before used in the door 110. The inner vertical wall portion 114 has a hole 133 formed therethrough. The hole 133 is sized to allow the convexity 132 to pass therethrough, as shown in Fig. 16.

The first and second hinge portions 123, 124 extend in the front-and-rear direction of the vehicle body 11. The convexity 132 extends in the front-and-rear direction of the vehicle body 11. The hole 133 extends in the front-and-rear direction of the vehicle body 11.

As shown in Fig. 15 and Fig. 16, the flange portion 122 pivots on the first hinge portion 123, as shown by an arrow c1 while the movable portion 125 pivots on the second hinge portion 124, as shown by an arrow c2, such that the convexity 132 protrudes through the hole 133 into the door pocket member 111. The convexity 132 protruding into the door pocket member 111 is adapted to engage a passenger's hand. The convexity 132 has a claw (not shown) for engaging the hole 133 to lock the convexity 132 protruding through the hole 133. When the door pocket member 111 is used in the door 110, the flange portion 122 is aligned with the upper flange 117a (Fig. 14).

As shown in Fig. 14 to Fig. 16, since the door pocket member 111 includes the plural hinge portions 123, 124, the convexity 132 can various shapes. That is, the provision of the plural hinge portions improves freedom to design the convexity 132.

The convexity 132 extends through the hole 133 formed through the inner vertical wall portion 114 and is secured to the inner vertical wall portion 114. With the convexity 132 extending through the hole 133, the vehicular door 110 can be securely assembled.

The vehicular door according to the present invention has been described as being applied to the doors 20, 70, 110 shown in Figs. 3, 11 and 14, respectively, the door of the present invention may be arranged in combination with parts or structures of the door 20, 70, 110.

The vehicular door of the present invention is suitable for use in a car such as a sedan, a station wagon or a van.

A door (20; 70; 110) of a vehicle (10) includes a door pocket member (31; 71; 111) for engaging a hand of a passenger when the door (20; 70; 110) is moved by the passenger between an open position and a closed position. The door pocket member (31; 71; 111) includes an open end portion (37; 77; 117), a vertical wall portion (34; 74; 114) disposed on a side of a passenger compartment (12) of the vehicle (10), a hinge portion (43; 83; 123,124) formed on the vertical wall portion (34; 74; 114), and a movable portion (45; 85; 125) connected to the hinge portion (43; 83; 123,124) and disposed on a side of the open end portion (37; 77; 117). The movable portion (45; 85; 125) has a convexity (52; 92; 132) formed thereon. The convexity (52; 92; 132) is positioned inside the door pocket member (31; 71; 111) by pivotal movement of the movable portion (45; 85; 125) on the hinge portion (43; 83; 123,124).

## Claims

1. A door (20; 70; 110) of a vehicle (10), comprising a door pocket member (31; 71; 111) for engaging a hand of a passenger when the door (20; 70; 110) is moved by the passenger between an open position and a closed position, the door pocket member (31; 71; 111) comprising:
an open end portion (37; 77; 117);
a vertical wall portion (34; 74; 114) disposed on a side of a passenger compartment (12) of the vehicle (10); **characterised in that**
a hinge portion (43; 83; 123,124) formed on the vertical wall portion (34; 74; 114); and
a movable portion (45; 85; 125) connected to the hinge portion (43; 83; 123,124) and disposed on a side of the open end portion (37; 77; 117), the movable portion (45; 85; 125) having a convexity (52; 92; 132) formed thereon, the convexity (52; 92; 132) being positioned inside the door pocket member (31; 71; 111) by pivotal movement of the movable portion (45; 85; 125) on the hinge portion (43; 83; 123,124).

2. The door of claim 1, further including an armrest (28) located in the passenger compartment (12), the door pocket member (31; 71; 111) being disposed on the armrest (28) and having a box-shape, the door pocket member (31; 71; 111) having a top end portion defined by the open end portion (37; 77; 117), the hinge portion (43; 83; 123,124) extending in a front-and-rear direction of the vehicle (10), the convexity (52; 92; 132) extending in the front-and-rear direction of the vehicle (10).

3. The door of claim 1, wherein the hinge portion (43) is located at a level between levels of top and bottom edges (34a, 34b) of the vertical wall portion (34).

4. The door of claim 1, wherein the hinge portion (83; 123,124) is disposed on the side of the open end portion (77; 117).

5. The door of claim 1, wherein the hinge portion (123,124) is provided in plural.

6. The door of claim 4, wherein the vertical wall portion (114) has a hole (133) through which the convexity (132) extends.

## Patentansprüche

1. Tür (20; 70; 110) eines Fahrzeugs (10), umfassend ein Türtaschenelement (31; 71; 111) aufweist, das von einem Passagier mit der Hand zu ergreifen ist, wenn die Tür (20; 70; 110) vom Passagier zwischen einer offenen Stellung und einer geschlossenen Stellung bewegt wird, wobei das Türtaschenelement (31; 71; 111) umfasst:
einen offenen Endabschnitt (37; 77; 117);
einen vertikalen Wandabschnitt (34; 74; 114), der an einer Seite eines Passagierraums (12) des Fahrzeugs (10) angeordnet ist; **dadurch gekennzeichnet, dass**
ein Scharnierabschnitt (43; 83; 123, 124) an dem vertikalen Wandabschnitt (34; 74; 114) ausgebildet ist; und
ein beweglicher Abschnitt (45; 85; 125) mit dem Scharnierabschnitt (43; 83; 123, 124) verbunden ist und an einer Seite des offenen Endabschnitts (37; 77; 117) angeordnet ist, wobei an dem beweglichen Abschnitt (45; 85; 125) eine Konvexität (52; 92; 132) ausgebildet ist, wobei die Konvexität (52; 92; 132) durch Schwenkbewegung des beweglichen Abschnitts (45; 85; 125) an dem Scharnierabschnitt (43; 83; 123, 124) innerhalb des Türtaschenelements (31; 71; 111) angeordnet wird.

2. Die Tür von Anspruch 1, die ferner eine Armlehne (28) enthält, die in dem Passagierraum (12) angeordnet ist, wobei das Türtaschenelement (31; 71; 111) an der Armlehne (28) angeordnet ist und eine Kastenform hat, wobei das Türtaschenelement (31; 71; 111) einen oberen Endabschnitt hat, der durch den offenen Endabschnitt (37; 77; 117) definiert ist, wobei sich der Scharnierabschnitt (43; 83; 123, 124) in Längsrichtung des Fahrzeugs (10) erstreckt, wobei sich die Konvexität (52; 92; 132) in der Längsrichtung des Fahrzeugs (10) erstreckt.

3. Die Tür von Anspruch 1, worin der Scharnierabschnitt (43) auf einer Höhe zwischen den Höhen von oberen und unteren Rändern (34a, 34b) des vertikalen Wandabschnitts (34) angeordnet ist.

4. Die Tür von Anspruch 1, worin der Scharnierabschnitt (83; 123, 124) an der Seite des offenen Endabschnitts (77; 117) angeordnet ist.

5. Die Tür von Anspruch 1, worin der Scharnierabschnitt (123, 124) in einer Mehrzahl vorgesehen ist.

6. Die Tür von Anspruch 4, worin der vertikale Wandabschnitt (114) ein Loch (133) aufweist, durch das hindurch sich die Konvexität (132) erstreckt.

## Revendications

1. Poche (20; 70; 110) d'un véhicule (10), comprenant un élément de poche de porte (31; 71; 111) pour engager une main d'un passager lorsque la porte (20; 70; 110) est mue par le passager entre une position ouverte et une position fermée, l'élément de poche de porte (31; 71; 111) comprenant:
une partie d'extrémité ouverte (37; 77; 117);
une partie de paroi verticale (34; 74; 114) disposée d'un côté d'un compartiment à passagers (12) du véhicule (10);
**caractérisée en ce que**
une partie charnière (43; 83; 123, 124) est formée dans la partie de partie de paroi verticale (34; 74; 114); et
une partie mobile (45; 85; 125) est connectée à la partie charnière (43; 83; 123, 124) et disposée d'un côté de la partie d'extrémité ouverte (37; 77; 117), la partie mobile (45; 85; 125) ayant une convexité (52; 92; 132) formée sur celle-ci, la convexité (52; 92; 132) étant positionnée à l'intérieur de l'élément de poche de porte (31; 71; 111) par un mouvement de pivotement de la partie mobile (45; 85; 125) sur la partie charnière (43; 83; 123, 124).

2. Porte suivant la revendication 1, comprenant en outre un accoudoir (28) situé dans le compartiment à passagers (12), l'élément de poche de porte (31; 71; 111) étant disposé sur l'accoudoir (28) et ayant une forme de boîte, l'élément de poche de porte (31; 71; 111) ayant une partie d'extrémité supérieure définie par la partie d'extrémité ouverte (37; 77; 117), la partie charnière (43; 83; 123, 124) s'étendant dans une direction avant et arrière du véhicule (10), la convexité (52; 92; 132) s'étendant dans la direction avant et arrière du véhicule (10).

3. Porte suivant la revendication 1, dans laquelle la partie charnière (43) est située à un niveau entre les niveaux des bords supérieur et inférieur (34a, 34b) de la partie de paroi verticale (34).

4. Porte suivant la revendication 1, dans laquelle la partie charnière (83; 123,124) est disposée sur le côté de la partie d'extrémité ouverte (77; 117).

5. Porte suivant la revendication 1, dans laquelle la partie charnière (123, 124) est prévue de multiples fois.

6. Porte suivant la revendication 4, dans laquelle la partie de paroi verticale (114) a un trou (133) à travers lequel s'étend la convexité (132).
